# EUROPEAN PATENT APPLICATION

(11) **EP 3 753 819 A1**
(43) Date of publication of application: **23.12.2020**
(21) Application number: 19382506.4
(22) Date of filing: 18.06.2019
(51) Int. Cl.: B62D 25/24, F16J 15/02

(54) **SEALING ELEMENT FOR HOLES**

(71) Applicant: Illinois Tool Works Inc., Glenview, IL 60025 (US)
(72) Inventor: ARTETA, Javier, NAVARRA (ES)
(74) Representative: HGF

(57) **Abstract**

The sealing element for holes comprises a body (1) defining a tubular section (2), said body (1) comprising a first lip (3) and at least one second lip (4), wherein said tubular section (2) comprises at least one pleat (6), and said at least one pleat (6) extends inwardly with respect to said tubular section (2).

It permits to provide a sealing element that reduces its stiffness, keeping the sealing element tight.

## Description

The present invention refers to a sealing element for holes, e.g. for its application to metal sheets of vehicle bodyworks.

### Background of the invention

Various ways of sealing holes made in vehicle bodywork panels or in other components are known, and in this regard, document ES2006404A6 can be cited first.

This document discloses a plastic closure cap for closing an opening of a vehicle body, being based on the fact that the cover includes a sealing lip in an inclined arrangement and an elastic locking ring opposite to said lip, so that the latter rests on the periphery of the element or sheet on which the hole is made, in which the cover is precisely housed, while the locking ring rests on the lower face of said sheet or element.

In this document it is also disclosed that, underneath the locking ring, a support is provided that can be configured by another elastic lip, which presses against the locking ring to keep it in permanent contact on the surface corresponding to the element or sheet in which the hole that closes the lid is made, to achieve a tightness.

Although this type of closures is simple, it is evident that the sealing is sometimes not appropriate or optimal, due to the deformation or even possible breakage of both the support element and the interlock ring.

To improve the sealing, document EP1375308 A1 discloses another elastic closure cap in which a heat-deformable seal and anchoring lugs of the lid are included.

This document also discloses a seal for sealing holes in sheets, designed, in particular, to seal holes made in sheets, such as those of automobile bodyworks, comprising a cup-shaped body with a divergent peripheral outer wing, derived from a neck, formed by a bowl-shaped form of the body and diverging outward from said neck, and a diverging peripheral inner wing at the end of said neck opposite said outer wing.

Documents EP 0631923 A1 and EP 0779203 A1 disclose two sealing-sealants provided with two sealing zones or bands based on a flux material or glue, so that in the application of the sealant on the hole of the sheet a first sealing area is produced, in correspondence with the support of the perimetral and external lip of the body of the obturator on the upper surface of the sheet, with the interposition of the glue or flux and sealing material.

These known sealing elements comprise a body with a tubular section provided with a thick and straight wall, that requires a high insertion force due to the stiffness provided by said tubular section, said high insertion force being uncomfortable for the user.

### Description of the invention

Therefore, one purpose of the present invention is to provide a sealing element that reduces its stiffness, keeping the sealing element tight.

With the sealing element according to the present invention it is possible to solve said drawbacks, providing other advantages that are described below.

The sealing element for holes according to the present invention comprises a body defining a tubular section, said body comprising a first lip and at least one second lip, wherein said tubular section comprises at least one pleat.

With this at least one pleat in the tubular section, this tubular section is used as a bellows, providing a sealing element with a reduced stiffness, making flexible the tubular section and keeping the sealing element tight.

Advantageously, said at least one pleat extends inwardly with respect to said tubular section.

According to a preferred embodiment, the tubular section comprises only one pleat.

Furthermore, said pleat defines an acute angle, even though it could define a curved portion and not an acute angle.

Advantageously, the tubular section is made from a flexible material.

Furthermore, according to a preferred embodiment, said first lip comprises an edge, wherein said edge is made from a different material than the rest of first lip.

According to this preferred embodiment, the body, including the tubular section, the first lip and the second lip(s) are made from one piece.

### Brief description of the drawings

For a better understanding the above explanation and for the sole purpose of providing an example, some non-limiting drawings are included that schematically depict a practical embodiment.
Figs. 1-2 are perspective views of the sealing element according to the present invention; and
Figs. 3-5 are sectional elevation views of the sealing element according to the present invention, during its insertion in a hole, from an initial position outside the hole to a final position inserted inside the hole.

### Description of a preferred embodiment

As shown in the drawings, the sealing element according to the present invention comprises a body, indicated generally by numeral reference 1, defining a tubular section 2, and comprising a first lip 3 and at least one second lip 4, in particular, a plurality of second lips 4 according to the shown embodiment.

According to the position shown in the drawings, the first lip 3 is the upper lip and the second lips 4 are the lower, but the sealing element according to the present invention can be used in any suitable position.

According to the shown embodiment, the first lip 3 is curved towards the tubular section, and the second lips 4 extend upwardly in the position shown in the drawings.

Furthermore, the first lip 3 comprise an edge 5, that is placed in the internal portion of this curved first lip 3.

Preferably, the whole body 1, including the first and second lips 3, 4 are made from one piece of a flexible material, but the edge 5 is made from another material.

According to the present invention, the tubular section 2 of the body 1 is a bellows comprising at least one pleat 6. Even though the shown embodiment comprises just one pleat 6, the tubular section 2 can comprise a plurality of pleats.

It must be pointed out that in the present description and in the claims, the term "pleat" must be interpreted as any deformation that permits to increase and reduce the height of the tubular section 2, such as a corrugation, undulation, fold, or the like.

The sealing element according to the present invention is used for sealing holes, e.g. holes made in metal sheets, such as made in a vehicle framework.

These sealing elements need to be inserted easily and to provide a reliable sealing for said holes.

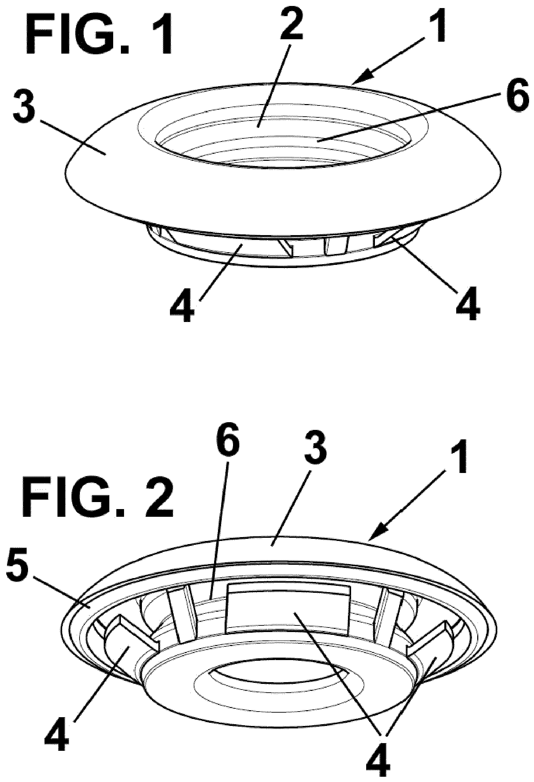

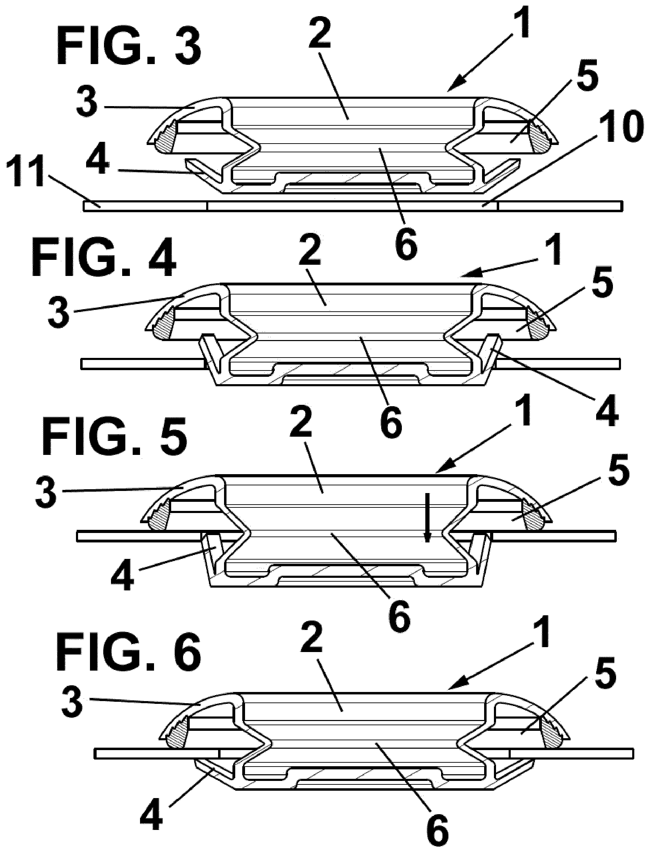

In Fig. 3 the sealing element is placed outside a hole 10 in a metal sheet 11. For placing the sealing element inside said hole 10, first a force (shown by arrow A in Fig. 1) is applied.

Firstly, the second or lower lips 4 contact with the edge of the hole 10 and these second lips 4 folds upwardly (according to the position shown in the drawings) towards the tubular section 2, as shown in Fig. 4.

When the second lips 4 fold upwardly, the insertion of the lower portion of the tubular section 2 is permitted (Fig. 5), and thanks to the pleat 6 this tubular section 2 is extended with respect to the previous position, so that a reduced force is applied, in comparison with the force required by the conventional sealing elements.

When the tubular section 2 is extended downwardly, there is a moment, that the second lips 4 completely pass through the hole 10, so that no contact is made between the second lips 4 and the edge of the hole 10.

In this position, the second lips 4 fold downwardly thanks to the flexible nature of the second lip 4.

Finally, and thanks to its flexible nature of the tubular section 2 and the presence of the pleat 6, the height of the tubular section 2 is contracted, as shown in Fig. 6, so that the second lips 4 contact with the lower side of the metal sheet 11.

In this position, the sealing of the hole 10 is guaranteed by the first and second lips 3, 4, which are in contact with the upper side and the lower side of the metal sheet 11, as shown in Fig. 7.

Even though reference has been made to a specific embodiment of the invention, it is obvious for a person skilled in the art that the sealing element described herein is susceptible to numerous variations and modifications, and that all of the details mentioned can be substituted for other technically equivalent ones without departing from the scope of protection defined by the attached claims.

## Claims

1. Sealing element for holes, comprising a body (1) defining a tubular section (2), said body (1) comprising a first lip (3) and at least one second lip (4), **characterized in that** said tubular section (2) comprises at least one pleat (6).

2. Sealing element according to claim 1, wherein said at least one pleat (6) extends inwardly with respect to said tubular section (2).

3. Sealing element according to claim 1 or 2, wherein the tubular section (2) comprises only one pleat (6).

4. Sealing element according to anyone of the previous claims, wherein said pleat (6) defines an acute angle.

5. Sealing element according to anyone of the previous claims, wherein the tubular section (2) is made from a flexible material.

6. Sealing element according to anyone of the previous claims, wherein said tubular section (2) with said at least one pleat (6) defines a bellows.

7. Sealing element according to claim 1, wherein said first lip (3) comprises an edge (5).

8. Sealing element according to claim 7, wherein said edge (5) is made from a different material than the rest of first lip (3).

9. Sealing element according to claim 1, wherein the body (1), including the tubular section (2), the first lip (3) and the at least one second lip (4) are made from one piece.
